# EUROPÄISCHE PATENTSCHRIFT

(11) **EP 0 606 087 B1**
(45) Veröffentlichungstag und Bekanntmachung des Hinweises auf die Patenterteilung: **24.04.1996**
(21) Anmeldenummer: 94100172.9
(22) Anmeldetag: 07.01.1994
(51) Int. Cl.: A01F 25/20, A01F 12/40

(54) **Vorrichtung für die Entnahme, Zubereitung und Verteilung von Viehfutter**
Device for taking out, preparing and distributing of animal fodder
Dispositif pour retirer, préparer et distribuer du fourrage pour bétail

(30) Priorität: 08.01.1993 DE 4300148
(43) Veröffentlichungstag der Anmeldung: 13.07.1994
(73) Patentinhaber: De Dissel Beheer B.V., NL-7122 JH Aalten (NL)
(72) Erfinder: Ansink, J.C., NL-7122 JP Aalten (NL)
(74) Vertreter: Schulze Horn, Stefan, Dipl.-Ing. M.Sc.

(56) Entgegenhaltungen:
- EP-A- 0 014 154
- EP-A- 0 415 466
- WO-A-89/02215
- DE-A- 3 313 227

## Beschreibung

Die Erfindung betrifft eine Vorrichtung für die Entnahme, Zubereitung und Verteilung von Viehfutter, gemäß dem Oberbegriff des Anspruches 1.

Eine Vorrichtung der genannten Art ist aus der NL-OS 90 00 682 bekannt. Bei dieser bekannten Vorrichtung ist der Schneidschild starr an dem vorderen Ende des Auslegerarmes angeordnet. Der Auslegerarm selbst ist als Teleskoparm ausgebildet und längenveränderlich. Als Mischorgan sind bei dieser Vorrichtung zwei in Querrichtung des Futterbehälters nebeneinander angeordnete, um zwei parallele, in Längsrichtung der Vorrichtung verlaufende Achsen drehbare Mischflügel vorgesehen. Die beiden Flügel drehen sich in einander entgegengesetzter Richtung, wobei sich die Drehbereiche überschneiden, so daß eine intensive Mischung des Futters erreicht wird. Gleichzeitig sorgen die Flügel für eine Förderung des aufbereiteten Futters zu zwei Austragschnecken, mit denen wahlweise das Futter nach links oder rechts ausgetragen werden kann.

Als nachteilig wird bei der bekannten Vorrichtung angesehen, daß die Ausführung mit einem teleskopierbaren Auslegerarm konstruktiv sehr aufwendig ist und das Einladen von Futter in den Futterbehälter hiermit relativ umständlich vonstatten geht. Außerdem verbleiben aufgrund dieser Konstruktion größere nicht durchmischte, nicht austragbare Futtermengen innerhalb des Futtermittelbehälters, was zusätzliche Handarbeit erforderlich macht. Mit den beiden Rührflügeln wird zwar eine gute Futterdurchmischung erreicht, jedoch können diese nicht für eine wirkungsvolle Zerkleinerung von langfaserigem Futter, z.B. Grassilage, sorgen. Unzerkleinerte langfaserige Futterbestandteile führen aber einerseits zu häufigeren betrieblichen Störungen an der Vorrichtung und sind andererseits hinsichtlich der Aufnahme und Verwertung durch das damit gefütterte Vieh ungünstig.

Es stellt sich daher die Aufgabe, eine Vorrichtung der eingangs genannten Art zu schaffen, die die aufgeführten Nachteile vermeidet und die insbesondere neben einer guten Futterdurchmischung auch eine wirkungsvolle Zerkleinerung von langfaserigen Futterbestandteilen sicherstellt und bei der weiterhin das Befüllen und Entleeren des Futterbehälters einfach und zuverlässig erfolgt.

Die Lösung dieser Aufgabe gelingt erfindungsgemäß durch eine Vorrichtung der eingangs genannten Art mit den kennzeichnenden Merkmalen des Anspruches 1.

Mit der Erfindung wird erreicht, daß das Futter nicht nur intensiv gemischt, sondern auch mittels der Schneiden an den rotierenden Armen im Zusammenwirken mit den feststehenden Gegenschneiden im Behälter in gewünschter Weise durch Zerschneiden zerkleinert wird. Dabei bleibt die technische Konstruktion der Vorrichtung vergleichsweise einfach und für ihren Betrieb genügen ein relativ geringer Kraftaufwand und niedrige Drehzahlen der Welle. Das zerkleinerte Futter neigt im Gegensatz zu langfaserigem Gut kaum zum Anhängen an der Welle und den daran befestigten Armen, so daß eine praktisch vollständige Entleerung des Behälters ohne manuelle Eingriffe sichergestellt wird. Die Aufnahme und Verwertung des so aufbereiteten, nämlich kleingeschnittenen und homogen durchmischten Futters durch das damit gefütterte Vieh wird ebenfalls verbessert, wodurch ein günstigerer Futterverwertungsgrad erzielt wird.

Bevorzugt ist lediglich eine einzelne, horizontal quer durch den Futterbehälter verlaufende Welle vorgesehen, was bei Erfüllung aller vorgesehenen Funktionen eine einfache Konstruktion der Vorrichtung ermöglicht.

Bevorzugte Ausgestaltungen und Weiterbildungen der Schneiden und Gegenschneiden sind in den Ansprüchen 3 bis 5 angegeben, wobei insbesondere eine gute Schneidwirkung nach Art von Scheren erreicht wird.

Hinsichtlich des Schneidschildes der Vorrichtung schlägt die Erfindung vor, daß der Schneidschild um eine nahe dessen oberer Kante verlaufende Achse relativ zum Auslegearm verschwenkbar ist. Durch diese Ausgestaltung kann der Schneidschild in Abhängigkeit von der jeweiligen Entnahmesituation, insbesondere der Entnahmehöhe am Silo, passend eingestellt werden. Außerdem kann der Schneidschild dazu benutzt werden, das ausgeschnittene Futter in das Innere des Futterbehälters zu schieben. In der abgesenkten und nach innen verschwenkten Stellung bildet der Schneidschild dann die Rückwand des Futterbehälters und schließt diesen nach hinten hin ab. Damit sind auch Transporte von Futter mit der Vorrichtung möglich, ohne daß Futterverluste auftreten.

Bevorzugte Schneidmittel für den Schneidschild sind im Anspruch 8 angegeben.

Durch die Ausgestaltung des Bodens des Futterbehälters nach dem Anspruch 9 wird erreicht, daß eine einfache Schwenkbewegung schon das Futter vollständig erfaßt und in das Innere des Futterbehälters bewegt.

In ähnlicher Weise ist vorgesehen, daß zumindest der Boden des Futterbehälters in dem von dem Misch- und Zerkleinerungsorgan überstreichbaren Bereich als Zylindermantelabschnitt ausgebildet ist, dessen Radius im wesentlichen dem maximalen Radius des Misch- und Zerkleinerungsorgans zuzüglich eines Freigangmaßes entspricht. Hierdurch werden Toträume innerhalb des Futterbehälters vermieden, so daß sämtliche Futterbestandteile, die sich im Behälter befinden, in den Misch- und Zerkleinerungsvorgang einbezogen werden.

Ergänzend kann auch der Schneidschild an seiner dem Behälterinneren zugewandten Seite dieser zuvor erwähnten Zylindermantelform angepaßt sein, wodurch sich bei geschlossenem Zustand des Behälters eine Form ergibt, die zumindest in der unteren Hälfte zylindermantelförmig ist. Zusätzlich kann die dem Schneidschild gegenüberliegende Stirnwand des Futterbehälters in diese Zylindermantelform noch wenigstens teilweise einbezogen sein.

Weiterhin kann an dem Auslegerarm oder den Auslegerarmen ein in dessen/deren abgesenkter Stellung den Futterbehälter nach oben hin abdeckender gitter- oder plattenförmiger Deckel angeordnet sein, wodurch in abgesenktem und nach innen verschwenktem Zustand von Auslegerarm und Schneidschild ein allseitig geschlossener Futterbehälter gebildet wird. Insbesondere bei lockeren Futtermitteln, wie Heu oder Gras, wird durch den Deckel verhindert, daß das Futter sich nach oben hin aus dem Eingriffsbereich des Misch- und Zerkleinerungsorgans entfernen kann.

Bevorzugte Ausgestaltungen der für den seitlichen Austrag des aufbereiteten Futters vorgesehenen Teile der Vorrichtung sind in den Ansprüchen 13 bis 18 dargelegt. Diese Ausgestaltungen ermöglichen eine wahlweise nach links oder rechts erfolgende Ausgabe des Futters, wobei eine Ausgabe zweckmäßig erst erfolgt, nachdem bei noch verschlossenem Behälter eine ausreichende Mischung und Zerkleinerung vorgenommen wurde. Im Zusammenhang hiermit sind die das Misch- und Zerkleinerungsorgan bildenden Arme auf ihrer Welle zweckmäßig so winkelversetzt zueinander angeordnet, daß sich eine gewisse seitliche Förderwirkung, je nach Drehrichtung der Welle zu der einen oder anderen Seite des Behälters, ergibt. Durch Wahl der Drehrichtung der Welle mit den Armen kann dann eine Zuförderung des Futters in den linken oder den rechten Teil des Behälters bewirkt werden, was vorteilhaft ist, wenn zwei getrennte Öffnungen im Behälterboden vorhanden sind. Außerdem wird durch den Versatz ein gleichmäßiger Kraftbedarf im Verlauf einer Umdrehung der Welle erreicht. Die Zahl der Arme an der Welle richtet sich im wesentlichen nach der Breite des Futterbehälters; sie liegt bevorzugt zwischen fünf und fünfzehn. Der Abstreifrost in der Öffnung sorgt dafür, daß Futter mit einem hohen Anteil an feinteiligen Bestandteilen, wie Maissilage oder Biertreber, nur dosiert durch die Öffnung hindurchtreten kann und so auch gleichmäßig durch das Querförderband ausgetragen wird.

Um die Vorrichtung gemäß der Erfindung möglichst kostengünstig und nutzbringend einsetzen zu können, ist vorgesehen, daß diese als von einer Zugmaschine oder einem Traktor ziehbarer und betätigbarer Anhänger mit zwei Laufrädern und einer Zugdeichsel ausgeführt ist und daß zumindest der Behälter zwischen den an in Längsrichtung verlaufenden Schwingen angebrachten Rädern zur Futteraufnahme bis auf Bodenniveau absenkbar ist. Umgekehrt kann entsprechend der Behälter in eine bestimmte Höhe angehoben werden, so daß auch mehrere Meter hohe Silos bei dem Ausschneiden von Futter keine Probleme bereiten. Alternativ kann die Vorrichtung auch als selbstfahrendes Fahrzeug mit wenigstens drei Rädern, einem eigenen Antriebsmotor und Lenkung sowie Führerstand ausgeführt sein.

Alternativ zu der vorangehend beschriebenen Ausführung kann die Vorrichtung auch als von einem Radlader oder einem Schlepper an dessen Hebeorganen tragbares Anbaugerät ausgeführt sein. In dieser Ausführung benötigt die Vorrichtung keine Räder und keine Deichsel, sondern ist vorzugsweise mit Kupplungsorganen, die zu dem die Vorrichtung tragenden Fahrzeug passen, ausgestattet, z.B. mit einer bekannten Dreipunktkupplung oder einem Frontladeradapter.

Zweckmäßig sind die drehbaren Teile der Vorrichtung durch einen Zapfwellenantrieb oder durch Hydromotoren antreibbar und die heb- und senkbaren und die verschwenkbaren Teile der Vorrichtung durch hydraulische Kolben-Zylinder-Einheiten betätigbar. Die genannten Antriebs- und Betätigungseinrichtungen sind problemlos handhabbar und können bei Ausführung der Vorrichtung als Anhänger von der Zugmaschine oder dem Traktor aus durch deren Hydraulikanlage versorgt werden. Außerdem können damit die benötigten, teilweise relativ großen Kräfte ohne weiteres erzeugt werden.

Um dem Benutzer der Vorrichtung eine möglichst genaue Kenntnis von der Menge des aufgenommenen Futters sowie gegebenenfalls der Mengenanteile von miteinander zu vermischenden, unterschiedlichen Futtersorten zu geben, wird vorgeschlagen, daß die Vorrichtung mit einer integrierten Wägeeinrichtung ausgebildet ist. Hierzu ist bevorzugt vorgesehen, daß an Abstützpunkten der beiden Schwingen und der Deichsel oder der Kupplungsorgane jeweils ein elektrisches oder elektronisches Lastaufnahmeelement, wie es an sich bekannt ist, angeordnet ist und daß diese Lastaufnahmeelemente mit einer an sich ebenfalls bekannten Auswerte- und Gewichtsanzeigeeinheit verbunden sind. Mit dieser Einrichtung kann unmittelbar nach der Futteraufnahme eine Wägung und damit eine Mengenbestimmung des im Behälter befindlichen Futters durchgeführt werden. Dies erlaubt genau dosierte Futterzubereitungen und -zuteilungen und damit einen besonders wirtschaftlichen Futtereinsatz.

Ein Ausführungsbeispiel der Erfindung wird im folgenden anhand einer Zeichnung erläutert. Die Figuren der Zeichnung zeigen:
- Figur 1: die Vorrichtung in Seitenansicht in einem ersten Betriebszustand,
- Figur 2: die Vorrichtung aus Figur 1 in einem zweiten Betriebszustand,
- Figur 3: ein Detail eines Misch- und Zerkleinerungsorgans der Vorrichtung in Seitenansicht, teils im Vertikalschnitt,
- Figur 4: das Detail des Misch- und Zerkleinerungsorgans gemäß Figur 3 in Draufsicht und
- Figur 5: die Vorrichtung in einer zweiten Ausführung, im Ausschnitt in einer der Figur 1 entsprechenden Darstellung.

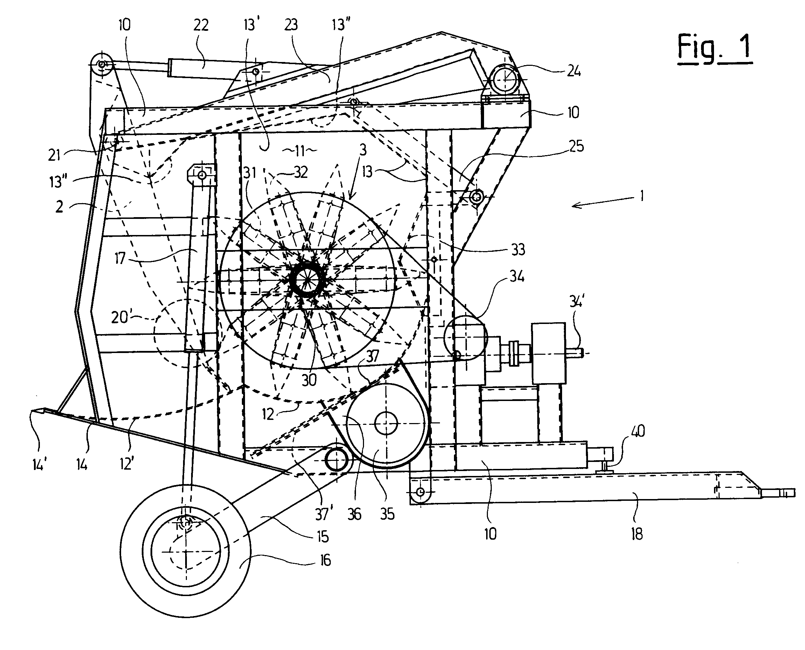

Wie die Figur 1 der Zeichnung zeigt, ist das hier dargestellte Ausführungsbeispiel der Vorrichtung 1 als von einem Traktor oder einer Zugmaschine zu ziehender Anhänger mit einer Deichsel 18 und Rädern 16 ausgeführt. Den tragenden Teil der Vorrichtung 1 bildet ein Tragrahmen 10, der in üblicher Weise aus verschiedenen Profilen zusammengesetzt, vorzugsweise zusammengeschweißt ist. Den zentralen Teil der Vorrichtung 1 bildet ein Futterbehälter 11, der nach unten hin von einem Boden 12, 12', nach vorne hin, d.h. in der Zeichnung nach rechts, von einer Stirnwand 13 und zu den Seiten hin durch Seitenwände 13' begrenzt ist. Die Stirnwand 13 verläuft in ihrem oberen Teil schräg nach innen und geht an ihrem oberen Ende in einen Deckel 13'' über, der als Gitter- oder Blechplatte ausgebildet ist.

Nach hinten hin, d.h. in der Zeichnung nach links, ist der Futterbehälter 11 in dem in Figur 1 gezeigten Betriebszustand der Vorrichtung 1 durch einen Schneidschild 2 verschlossen. Dieser Schneidschild 2 ist an einem Paar von über den Futterbehälter 11 verlaufenden Auslegerarmen 23, an denen auch der Deckel 13'' angebracht ist, um eine Schwenkachse 21 verschwenkbar gehaltert. Zur Ausführung der Schwenkbewegung des Schneidschildes 2 um die Schwenkachse 21 dient mindestens eine Kolben-Zylinder-Einheit 22 im oberen Teil der Vorrichtung 1. Die Auslegearme 23 sind ihrerseits zusammen mit dem Schneidschild um eine weitere Schwenkachse 24 mittels jeweils einer Kolben-Zylinder-Einheit 25 heb- und senkbar. Beide Schwenkachsen 21, 24 verlaufen in einer im wesentlichen horizontalen Richtung quer zur Längsachse der Vorrichtung 1, d.h. senkrecht zur Zeichnungsebene.

Im Inneren des Futterbehälters 11 ist ein Misch- und Zerkleinerungsorgan 3 angeordnet. Dieses besteht aus einer einzelnen Welle 30, an der winkelversetzt mehrere, hier insgesamt elf Arme 31 angebracht sind, wobei der erste und der elfte Arm deckungsgleich liegen. Die Welle 30 mit den Armen 31 ist durch einen Antrieb 34 über einen Zapfwellenanschluß 34' in Drehung versetzbar. Die Enden der Arme 31 tragen nach außen hin spitz zulaufende, dreieckförmige Schneiden 32, die hier als Doppelschneiden ausgebildet sind, wodurch eine Schneidwirkung in beiden Drehrichtungen der Welle 30 erzielt wird. Die Schneiden 32 wirken mit feststehenden Gegenschneiden 33, die im Futterbehälter 11 angeordnet sind, zusammen, wobei die Schneidengeometrie beispielsweise der von Blechscheren ähneln kann. Bei dem hier gezeigten Ausführungsbeispiel sind diese Gegenschneiden 33 als in vertikaler Richtung verlaufende, annähernd dreieckförmige Blechplatten ausgebildet, die im Übergangsbereich zwischen dem Boden 12 und der Stirnwand 13 des Futterbehälters 11 angebracht sind. Zweckmäßig sind sowohl die Schneiden 32 an den Armen 31 als auch die Gegenschneiden 33 an dem Futterbehälter 11 lösbar angebracht, z.B. mittels Verschraubungen, um einen Austausch oder einen vorübergehenden Ausbau zwecks Nachbearbeitung der Schneiden oder Erneuerung einzelner Schneiden zu ermöglichen.

Unterhalb des Bodens 12 des Futterbehälters 11 liegen zwei in Flucht zueinander ausgerichtete Förderkanäle 36, von denen hier der vordere sichtbar ist. In jedem Förderkanal 36 liegt eine Austragschnecke 35. Jeder der beiden Förderkanäle 36 ist über eine Öffnung 37 im Boden 12 mit dem Futterbehälter 11 verbunden, wobei mittels je eines Schiebers 37' die Öffnung 37 wahlweise verschließbar oder freigebbar ist.

Die schon erwähnten Räder 16, von denen hier das vordere sichtbar ist, sind an in Längsrichtung der Vorrichtung 1 verlaufenden Schwingen 15 gelagert, die sich einerseits unmittelbar verschwenkbar an der Vorrichtung 1 unterhalb des Bodens 12 des Futterbehälters 11 abstützen und die an ihrem das Rad 16 tragenden Ende über eine Kolben-Zylinder-Einheit 17 mit einem weiteren Punkt der Vorrichtung 1 seitlich am oberen Teil des Behälters 11 verbunden sind. In dem in Figur 1 gezeigten Betriebszustand der Vorrichtung 1 ist die Kolbenstange der Kolben-Zylinder-Einheit 17 vollständig ausgefahren, wodurch die Vorrichtung 1 eine angehobene Stellung einnimmt. In dieser angehobenen Stellung der Vorrichtung 1 und mit nach unten und innen verschwenktem Schneidschild 2 kann die Vorrichtung 1 wie ein Anhänger von einer Zugmaschine oder einem Schlepper verfahren werden.

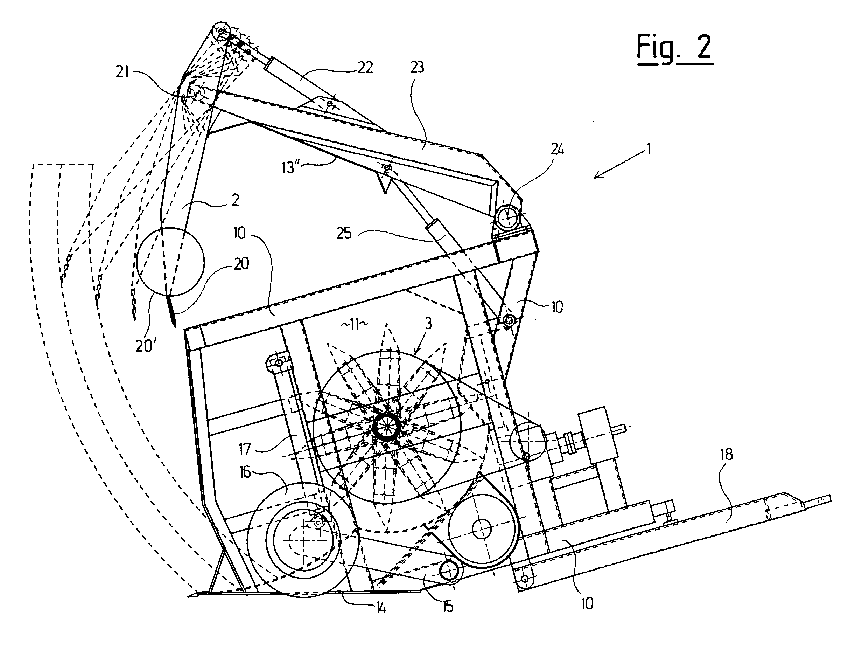

Figur 2 der Zeichnung zeigt die Vorrichtung 1 in gleicher Darstellungsweise wie in Figur 1 in einem Betriebszustand während der Aufnahme von Futter in den Futterbehälter 11. Die Vorrichtung 1 ist hierzu durch Einfahren der Kolbenstange der Kolben-Zylinder-Einheit 17 in eine abgesenkte Stellung gebracht, wodurch eine Absetzplatte 14, die den unteren hinteren Teil der Vorrichtung 1 bildet, auf den vorhandenen Untergrund, z.B. die Bodenfläche eines Fahrsilos, abgesenkt ist. An ihrem Stirnende ist die Absetzplatte 14 mit einer Ladekante 14' ausgebildet, die spitz-keilförmig ist und mit der die Absetzplatte 14 durch Rückwärtsbewegen der Vorrichtung 1 in einen Futtermittelvorrat eingestoßen werden kann. Die Deichsel 18 nimmt demzufolge eine schräg nach oben verlaufende Lage ein.

Weiterhin ist zur Aufnahme von Futter der Schneidschild 2 mittels Anhebens der Auslegearme 21 nach oben hin bewegt. Hierzu ist die Kolbenstange der Kolben-Zylinder-Einheit 25 in ihre ausgefahrene Stellung gebracht worden. Aus seiner angehobenen Stellung kann dann der Schneidschild 2 von oben nach unten verfahren werden und dabei Futter aus der Stirnfläche eines Futtermittelvorrats ausschneiden. Hierzu sind an der Unterkante des Schneidschildes 2 Schneidmittel 20 vorgesehen, z.B. an sich bekannte oszillierende Schneidmesser, die den gewünschten Schnitt durch den Futtermittelvorrat ausführen. Zusätzlich sind seitliche drehantreibbare Schneidscheiben 20' vorgesehen. Durch wiederholtes Anheben und schneidendes Absenken des Schneidschildes unter stufenweiser Vorschwenkung des unteren Endes des Schneidschildes, wie in der Zeichnung durch gestrichelte Bewegungslinien angedeutet, können nach und nach die benötigten Futtermengen ausgeschnitten und in das Innere des Futterbehälters 11 befördert werden. Zum Abschluß des Beladevorganges wird der Schneidschild 2 in seiner abgesenkten Stellung von außen langsam nach innen verschwenkt, wobei schon der Mischvorgang durch Drehen des Misch- und Zerkleinerungsorgans 3, vorzugsweise gegen den Uhrzeigersinn in der Figur 2, beginnen kann, wodurch die zugeführten Futterpakete oder -brocken umgehend zerkleinert werden. Durch Anheben der Vorrichtung 1 mittels Betätigung der Kolben-Zylinder-Einheit 17 wird die Vorrichtung 1 wieder in einen verfahrbaren Zustand überführt und kann anschließend beispielsweise in einen Stallgang verfahren werden.

Nach einer ausreichend langen Mischung und Zerkleinerung des im Futterbehälter 11 befindlichen Futters mittels des Misch- und Zerkleinerungsorgans 3 kann das Futter mittels der einen der beiden Austragschnecken 35 wahlweise zur linken oder rechten Seite der Vorrichtung 1 unter stetiger Vorwärtsbewegung derselben ausgetragen werden. Die Futtermenge, die pro Zeiteinheit ausgetragen wird, kann durch die Fahrgeschindigkeit oder auch durch den Öffnungsgrad des Schiebers 37' in der Öffnung 37 beeinflußt werden.

Wie sowohl aus Figur 1 als auch aus Figur 2 ersichtlich ist, ist der Boden 12, 12' des Futterbehälters 11 in seinem vorderen, d.h. in der Zeichnung rechten Teil 12 dem Radius des Misch- und Zerkleinerungsorgans 3 und in seinem hinteren, d.h. in der Zeichnung linken Teil 12' dem Schwenkradius des Schneidschildes 2 in dessen abgesenkter Stellung angepaßt. Außerdem ist der Schneidschild 2 in seinem unteren Teil ebenfalls dem Radius des Misch-und Zerkleinerungsorgans 3 angepaßt. Nach oben hin wird durch den Deckel 13'' ein Ausweichen und Auswerfen von Futter verhindert. Hierdurch werden Toträume im Futterbehälter 11 vermieden und die gesamte darin befindliche Futtermenge wird dem Misch- und Zerkleinerungsvorgang unterzogen.

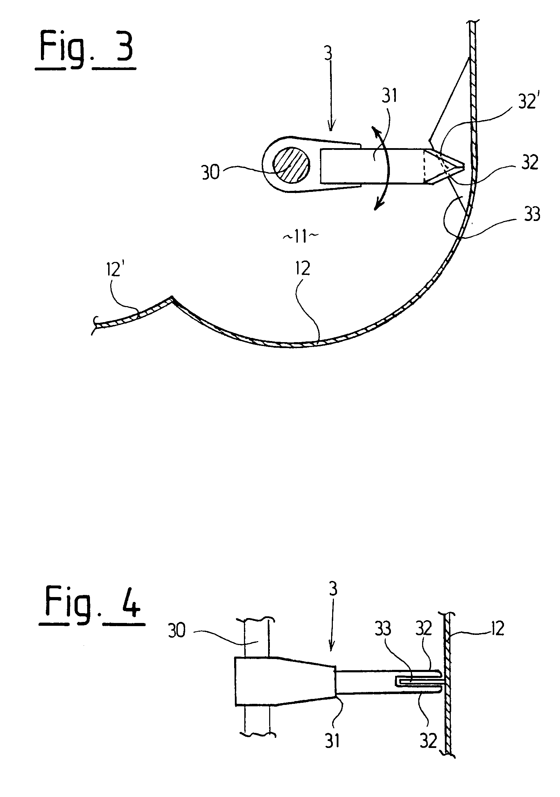

Anhand von Figur 3 und 4 der Zeichnung wird die Funktion des Misch- und Zerkleinerungsorgans 3 besonders deutlich. Die Figuren 3 und 4 zeigen lediglich einen der bei dem in Figur 1 und 2 gezeigten Ausführungsbeispiel insgesamt zehn Arme 31, der hier auf der Welle 30 in geeigneter Weise verdrehfest montiert ist. Das äußere Ende des Armes 31 ist mit zwei Schneiden 32, 32' ausgebildet, die mit einer Gegenschneide 33, die feststehend am Boden 12 des Futterbehälters 11 angebracht ist, zusammenwirken. Hierzu ist, wie besonders deutlich aus Figur 4 der Zeichnung hervorgeht, das äußere Ende des Armes 31 mit einem Durchtrittsschlitz für die feststehende Gegenschneide 33 ausgebildet. Je Arm 31 wirken somit zwei Schneiden 32 - bzw. 32' bei umgekehrter Drehrichtung - mit der feststehenden Gegenschneide 33 zusammen, um insbesondere langfaseriges Futter, wie Grassilage oder Heu, zu zerschneiden und zu zerkleinern und außerdem zu vermischen, falls unterschiedliche Futtersorten in den Behälter gefüllt wurden.

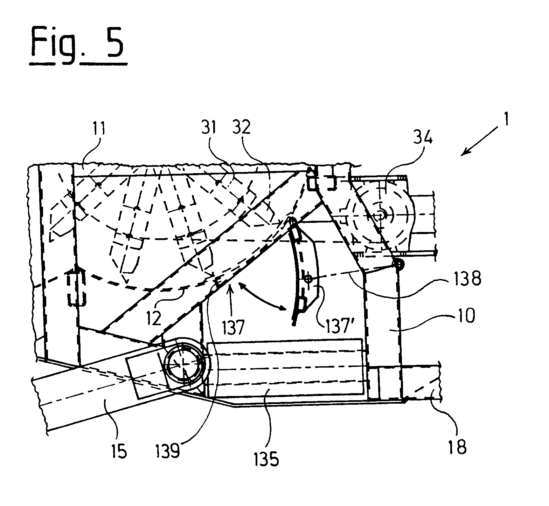

Figur 5 der Zeichnung schließlich zeigt ein Ausführungsbeispiel der Vorrichtung 1, bei dem anstelle der Förderkanäle und der darin liegenden Austragsschnecken, wie sie anhand von Figur 1 und 2 erläutert wurden, ein Querförderband 135 vorgesehen ist. Dieses Querförderband 135 verläuft über die gesamte Breite der Vorrichtung 1, d.h. in Figur 5 senkrecht zur Zeichnungsebene. Oberhalb des Querförderbandes 135 ist in dem Boden 12 des Futterbehälters 11 eine Öffnung 137 ausgespart, die mittels einer Schwenkklappe 137' wahlweise verschließbar oder freigebbar ist.

Befindet sich die Schwenkklappe 137' in ihrer Schließstellung, so bildet diese einen Teil des Bodens 12; wenn die Schwenkklappe 137' sich in ihrer Öffnungsstellung befindet, die in der Figur 5 dargestellt ist, wird die Öffnung 137 freigegeben und Futter kann aus dem Inneren des Behälters 11 nach unten fallen und so auf das Querförderband 135 gelangen. Das Querförderband 135 ist vorzugsweise mit einem umschaltbaren Antrieb ausgestattet, so daß wahlweise eine Förderung nach links oder rechts mittels des Querförderbandes 135 ermöglicht wird.

Zur Verstellung der Schwenkklappe 137' ist bei 138 ein Betätigungsorgan lediglich angedeutet, wobei es sich hier um eine hydraulisch betätigbare Kolben-Zylinder-Anordnung oder ein Betätigungs-Hebelwerk oder eine Seilzug-Feder-Anordnung handeln kann.

Die Schwenkklappe 137' kann so ausgeführt sein, daß sie über einen Teil oder über die Gesamtheit der Breite des Bodens 12 des Behälters 11 reicht; auch können zwei oder mehr Schwenkklappen 137' nebeneinander vorgesehen sein.

Im dargestellten Ausführungsbeispiel ist in die Öffnung 137 ein Abstreifrost 139 eingesetzt, der hier aus mehreren parallel zueinander und nebeneinander angeordneten Streifen besteht, die mit dem Boden 12 des Behälters 11 verbunden, bevorzugt verschraubt oder verschweißt, sind. Entsprechend dem zylindermantelförmigen Verlauf des Bodens 12 ist die den Armen 31 zugewandte Kante der Streifen des Abstreifrostes 139 konkav verlaufend ausgeführt. Die Streifen des Abstreifrostes sind so voneinander beabstandet angebracht, daß kleinteiliges Futter, wie Maissilage oder Biertreber, dosiert, d.h. lediglich in kleinen Mengen durch die Öffnung 137 hindurchtreten kann. Die Beförderung des Futters durch die Öffnung 137 wird dabei durch die vorbeilaufenden Spitzen bzw. Schneiden 32 der Arme 31 bewirkt.

Je nach Art des überwiegend zu verarbeitenden Futters kann eine größere oder kleinere Anzahl von Streifen mit entsprechend größerem oder kleinerem gegenseitigen Abstand am Abstreifrost 139 vorgesehen werden, in der Praxis beispielsweise zwischen sieben und drei Streifen. Auch kann der Abstreifrost 139 als auswechselbares Bauteil ausgebildet sein, um eine schnelle Änderung zu ermöglichen.

Die in Figur 5 sichtbaren weiteren Teile der Vorrichtung 1 entsprechen in ihrer Bezifferung den in den Figuren 1 bis 4 schon erläuterten Teilen.

## Patentansprüche

1. Vorrichtung für die Entnahme, Zubereitung und Verteilung von Viehfutter, insbesondere Silage, mit einem Futterbehälter (11), mit einem an dessen Rückseite angeordneten Schneidschild (2), der an mindestens einem heb- und senkbaren Auslegerarm (23) gehaltert ist, wobei der Schneidschild (2) an seiner Unterkante mit Schneidmitteln (20) zum Ausschneiden von Futter aus einem Futtermittelvorrat, insbesondere aus einem Fahrsilo, ausgestattet ist und in seiner abgesenkten Stellung den Futterbehälter (11) nach hinten hin abschließt, mit mindestens einem im Futterbehälter (11) angeordneten drehbaren Misch- und Zerkleinerungsorgan (3) und mit mindestens einer unten im oder unter dem Futterbehälter (11) liegenden Austrageinrichtung für einen seitlichen Austrag des zubereiteten Futters,
**dadurch gekennzeichnet,**
daß das Misch- und Zerkleinerungsorgan (3) aus mindestens einer durch den Futterbehälter (11) verlaufenden drehantreibbaren Welle (30) besteht, daß an der Welle (30) mehrere in radialer Richtung weisende, gegeneinander winkelversetzte Arme (31) angeordnet sind, daß jeweils der äußere Endbereich der Arme (31) mit mindestens einer Schneide (32) ausgebildet ist und daß innenseitig am Futterbehälter (11) feststehende, mit den Schneiden (32) an den Armen (31) zusammenwirkende Gegenschneiden (33) angeordnet sind.

2. Vorrichtung nach Anspruch 1, dadurch gekennzeichnet, daß eine einzelne horizontale quer durch den Futterbehälter (11) verlaufende Welle (30) vorgesehen ist.

3. Vorrichtung nach Anspruch 1 oder 2, dadurch gekennzeichnet, daß die Schneiden (32) an den Armen (31) und die Gegenschneiden (33) jeweils als Doppelschneiden mit Schneidwirkung in beiden Drehrichtungen der Welle (30) ausgebildet sind.

4. Vorrichtung nach einem der Ansprüche 1 bis 3, dadurch gekennzeichnet, daß die Schneiden (32) dreieckförmig nach außen hin spitz zulaufend ausgebildet sind.

5. Vorrichtung nach einem der Ansprüche 1 bis 4, dadurch gekennzeichnet, daß die Schneiden (32) an den Armen (31) jeweils als Schneidenpaar mit einem zwischenliegenden Schlitz (32') ausgebildet sind, wobei der Schlitz (32') als Durchtrittsschlitz für die zugehörige feststehende Gegenschneide (33) fungiert.

6. Vorrichtung nach einem der Ansprüche 1 bis 5, dadurch gekennzeichnet, daß die Gegenschneiden (33) flach-dreieckige Platten sind, wobei die stumpfwinklige Ecke zum Misch- und Zerkleinerungsorgan (3) weist.

7. Vorrichtung nach einem der Ansprüche 1 bis 6, dadurch gekennzeichnet, daß der Schneidschild (2) um eine nahe dessen oberer Kante verlaufende Achse (21) relativ zum Auslegerarm (23) verschwenkbar ist.

8. Vorrichtung nach einem der Ansprüche 1 bis 7, dadurch gekennzeichnet, daß die Schneidmittel (20) am Schneidschild (2) aus mindestens einem an dessen Unterkante angeordneten, oszillierend bewegbaren Schneidmesser und wahlweise zusätzlich aus jeweils mindestens einer an den Seitenkanten des Schneidschildes (2) angeordneten, drehantreibbaren Schneidscheibe (20') bestehen.

9. Vorrichtung nach Anspruch 7 oder 8, dadurch gekennzeichnet, daß der Boden (12, 12') des Futterbehälters (11) in dem von der Unterkante des Schneidschildes (2) überstreichbaren Bereich (12') als Zylindermantelabschnitt ausgebildet ist, dessen Radius im wesentlichen dem Schwenkradius des Schneidschildes (2) in dessen abgesenkter Stellung entspricht.

10. Vorrichtung nach einem der Ansprüche 1 bis 9, dadurch gekennzeichnet, daß zumindest der Boden (12, 12') des Futterbehälters (11) in dem von dem Misch-und Zerkleinerungsorgan (3) überstreichbaren Bereich (12) als Zylindermantelabschnitt ausgebildet ist, dessen Radius im wesentlichen dem maximalen Radius des Misch- und Zerkleinerungsorgans (3) zuzüglich eines Freigangmaßes entspricht.

11. Vorrichtung nach Anspruch 10, dadurch gekennzeichnet, daß der untere, von dem Misch- und Zerkleinerungsorgan (3) überstreichbare Bereich der dem Behälterinneren zugewandten Seiten des Schneidschildes (2) als gerundeter Zylindermantelabschnitt oder als mehrfach gekanteter, angenäherter Zylindermantelabschnitt ausgebildet ist, dessen Radius dem Radius des Bodens (12) entspricht, wobei die beiden Zylindermantelabschnittsflächen in der abgesenkten und nach innen verschwenkten Stellung des Schneidschildes (2) stetig aneinander anschließen.

12. Vorrichtung nach einem der Ansprüche 1 bis 11, dadurch gekennzeichnet, daß an dem Auslegerarm (23) oder den Auslegerarmen (23) ein in dessen/deren abgesenkter Stellung den Futterbehälter (11) nach oben hin abdeckender gitter- oder plattenförmiger Deckel (13'') angeordnet ist.

13. Vorrichtung nach einem der Ansprüche 1 bis 12, dadurch gekennzeichnet, daß unter dem Behälterboden (12) zwei miteinander fluchtende Austragschnecken (35) in je einem eigenen Förderkanal (36) vorgesehen sind, wobei sich jeder Förderkanal (36) mit seiner Austragschnecke (35) über maximal die halbe Breite des Behälters (11) in Querrichtung der Vorrichtung (1) erstreckt.

14. Vorrichtung nach Anspruch 13, dadurch gekennzeichnet, daß jeder Förderkanal (36) über je eine mittels eines Schiebers (37') verschließbare und freigebbare Öffnung (37) im Behälterboden (12) mit dem Behälterinneren verbunden ist.

15. Vorrichtung nach einem der Ansprüche 1 bis 12, dadurch gekennzeichnet, daß der Behälterboden (12) mindestens eine freigebbare und verschließbare Öffnung (137) aufweist und daß unter dieser Öffnung (137) ein Querförderband (135) angeordnet ist.

16. Vorrichtung nach Anspruch 15, dadurch gekennzeichnet, daß an der Öffnung (137) eine verschwenkbare Klappe (137') als Verschlußorgan angebracht ist.

17. Vorrichtung nach Anspruch 15 oder 16, dadurch gekennzeichnet, daß in der Öffnung (137) ein aus parallelen Streifen oder Stäben gebildeter Abstreifrost (139) angeordnet ist, wobei sich die Streifen oder Stäbe in Umfangsrichtung des Behälters (11) erstrecken.

18. Vorrichtung nach einem der Ansprüche 1 bis 17, dadurch gekennzeichnet, daß am Austragende jeder Austragschnecken (35) oder des Querförderbandes (135) außenseitig an der Vorrichtung (1) jeweils eine verstellbare und/oder elastisch-flexibel auslenk- und rückstellbare Futterrutsche und/oder eine elastischflexible Schutzabdeckung angebracht ist/sind.

19. Vorrichtung nach einem der Ansprüche 1 bis 18, dadurch gekennzeichnet, daß diese als von einer Zugmaschine oder einem Traktor ziehbarer und betätigbarer Anhänger mit zwei Laufrädern (16) und einer Zugdeichsel (18) ausgeführt ist und daß zumindest der Behälter (11) zwischen den an längsverlaufenden Schwingen (15) angebrachten Rädern (16) zur Futteraufnahme bis auf Bodenniveau absenkbar ist.

20. Vorrichtung nach einem der Ansprüche 1 bis 18, dadurch gekennzeichnet, daß diese als von einem Radlader oder einem Schlepper an dessen Hebeorganen tragbares Anbaugerät mit Kupplungsorganen ausgeführt ist.

21. Vorrichtung nach einem der Ansprüche 1 bis 20, dadurch gekennzeichnet, daß die drehbaren Teile der Vorrichtung (1) durch einen Zapfwellenantrieb (34, 34') oder durch Hydromotoren antreibbar sind und daß die heb- und senkbaren und die verschwenkbaren Teile der Vorrichtung (1) durch hydraulische Kolben-Zylinder-Einheiten (17, 22, 25) betätigbar sind.

22. Vorrichtung nach einem der Ansprüche 1 bis 21, dadurch gekennzeichnet, daß diese mit einer integrierten Wägeeinrichtung ausgebildet ist.

23. Vorrichtung nach Anspruch 22, dadurch gekennzeichnet, daß an Abstützpunkten der beiden Schwingen (15) und der Deichsel (18) oder der Kupplungsorgane jeweils ein elektrisches oder elektronisches Lastaufnahmeelement (40) angeordnet ist und daß diese Lastaufnahmeelemente (40) mit einer Auswerte- und Gewichtsanzeigeeinheit verbunden sind.

## Claims

1. Device for taking out, preparing and distributing animal fodder, particularly ensilage, comprising a fodder container (11) with a cutting shield (2) arranged at the rear side thereof with the cutting shield supported at at least one bracket (23) movable up and dawn, wherein the cutting shield is provided at the lower edge thereof with cutting means (20) far cutting fodder out of a fodder storage, particularly a vehicle mounted silo, and closes the fodder container (11) at the rear side thereof when in the lowered position, with at least one rotatable mixing and disintegrating device (3) positioned in the fodder container (11), and with at least one discharging device positioned under or dawn in the fodder container (11) for the lateral discharge of the prepared fodder,
**characterized in**
that the mixing and disintegrating device (3) cansists of at least one rotatable shaft (30) extending through the fodder container (11), that several arms (31) offset in an angle and pointing in radial direction are arranged at the shaft (30), that the outer end area of each arm (31) is formed with at least one cutter (32), and that counter cutters (33) cooperating with the cutters (32) at the arms (31) are secured at the inner sides of the fodder container (11).

2. Device according to claim 1, characterized in that that a single shaft (30) is provided with the shaft extending horizontally perpendicularly through the fodder container (11).

3. Device according to claim 1 or 2, characterized in that the cutters (32) at the arms (31) and the counter cutters (33) each are formed as douple cutters cutting in both rotation directions of the shaft (30).

4. Device according to one of the claims 1 to 3, characterized in that the cutters (32) are farmed as triangles extending in an acute angle outwards.

5. Device according to one of the claims 1 to 4, characterized in that the cutters (32) at the arms (31) each are formed as a pair of cutters with a slot (32') inbetween wherein the slot (32') acts as a passage slot far the associated secured counter cutter (33).

6. Device according to one of the claims 1 to 5, characterized in that the counter cutters (33) are flat triangular plates wherein the obtuse angled edge paints towards the mixing and disintegrating member (3).

7. Device according to one of the claims 1 to 6, characterized in that the cutting shield (2) is pivotible relative to the bracket (23) about an axis (21) extending close to the upper edge of the cutting shield.

8. Device according to one of the claims 1 to 7, characterized in that the cutting means (20) at the cutting shield (2) consist of at least one cutting knife oscillatingly movable and arranged at the lower edge of the cutting shield, and additionally as an obtion of at least one rotatable cutting disc (20') arranged at each of the lateral edges of the cutting shield (2).

9. Device according to claim 7 or 8, characterized in that the bottom (12, 12') of the fodder container (11) is formed as a cylinder surface section in the area (12') scanned by the lower edge of the cutting shield (2) with the radius of the cylinder surface section essentially corresponding with the pivoting radius of the cutting shield (2) in the lowered position thereof.

10. Device according to one of the claims 1 to 9, characterized in that at least the bottom (12, 12') of the fodder container (11) is farmed as a cylinder surface section in the area (12) scanned by the mixing and disintegrating member (3) with the radius of the cylinder surface section essentially corresponding with the maximal radius of the mixing and disintegrating member (3) plus a clearance dimension.

11. Device according to claim 10, characterized in that that the lower area of the sides of the cutting shield (2) facing the interior of the container and scanned by the mixing and disintegrating member (3) is shaped as a rounded cylinder surface section or is provided with multiple edges approximating a cylinder surface section, with the radius thereof corresponding with the radius of the bottom (12) wherein the two cylinder surface sections surfaces in the lowered and inwards pivoted position of the cutting shield (2) continuously abut against each other.

12. Device according to one of the claims 1 to 11, characterized in that at the bracket (23) or at the brackets (23) a grid or plate shaped lid (13'') is arranged closing the fodder container (11) an the top thereof in the lowered position of the bracket (s) 23.

13. Device according to one of the claims 1 to 12, characterized in that below the container bottom (12) two aligned discharging warms (35) each in a dedicated conveying passage (36) are provided wherein each conveying passage (36) with the associated discharging worm (35) extends across maximal half of the widths of the container (11) in the transverse direction of the device (1).

14. Device according to claim 13, characterized in that each conveying passage (36) is connected with the interior of the container by means of an opening (37) in the container bottom (12) to be opened and closed by a slide gate (37').

15. Device according to one of the claims 1 to 12, characterized in that the container bottom (12) comprises at least one opening (137) to be opened and closed, and that below this opening (137) a transverse conveyor belt (135) is arranged.

16. Device according to claim 15, characterized in that a pivotible flap (137') as a closing member is arranged at the opening (137).

17. Device according to claim 15 or 16, characterized in that in the opening (137) a stripping grid (139) comprised of parallel strips or rods is arranged wherein the strips or rods extend in circumferential direction of the container (11).

18. Device according to one of the claims 1 to 17, characterized in that at the discharging end of each discharging worm (35) or of the transverse conveyor belt (135) at the outer side of the device (1) an adjustable and/or resiliantly reciprocatingly movable fodder chute and/or a resiliant protective cover is arranged.

19. Device according to one of the claims 1 to 18, characterized in that the device is designed as a trailor to be drawn and actuated by a tractor or a pulling vehicle with the trailor comprising two running wheels (16) and one pole (18), and that at least the container (11) is movable downwards to ground level between the wheels (16) attached at longitudinally extending rockers (15) far receiving fodder.

20. Device according to one of the claims 1 to 18, characterized in that the device is designed as an attachment with coupling means mountable at a wheel loader or a tractor at the lifting members thereof.

21. Device according to one of the claims 1 to 20, characterized in that the rotatable parts of the device (1) are rotatable by a power take-off (34, 34') or by hydro motors, and that the parts of the device (1) to be lifted and lowered and pivoted are actuable by hydraulic piston cylinder untis (17, 22, 25).

22. Device according to one of the claims 1 to 21, characterized in that the device is designed with an integrated weighing device.

23. Device according to claim 22, characterized in that at supporting points of the two rockers (15) and the pale (18) or the coupling members an electric or electronic load sensing element (40) each is arranged, and that these load sensing element (40) are connected with an evaluation and weight display unit.

## Revendications

1. Dispositif pour prélever, préparer et distribuer du fourrage, en particulier du fourrage ensilé, comprenant une cuve de fourrage (11), une plaque coupante (2) qui est disposée sur la face arrière de ladite cuve et est fixée sur au mains un bras (23) susceptible d'être levé et abaissé, la plaque coupante (2) étant équipée sur son bord inférieur de moyens de coupe (20) pour couper du fourrage dans une réserve de fourrage, en particulier dans un silo mobile, et fermant la cuve de fourrage (11) à l'arrière lorsqu'elle est dans sa position abaissée, comprenant au mains un organe de mélange et de broyage (3) rotatif disposé dans la cuve de fourrage (11) et au moins un dispositif d'évacuation situé en bas dans la cuve de fourrage (11) ou sous ladite cuve et destiné à évacuer latéralement le fourrage préparé, caractérisé par le fait que l'organe de mélange et de broyage (3) est constitué d'au moins un arbre (30) pouvant être entraîné en rotation et s'étendant dans la cuve de fourrage (11), que plusieurs bras (31) orientés dans la direction radiale et présentant un décalage angulaire les uns par rapport aux autres sont disposés sur l'arbre (30), que la zone terminale extérieure de chacun des bras (31) comporte au moins une lame (32) et que des lames conjuguées (33) fixes, coopérant avec les lames (32) prévues sur les bras (31), sont disposées intérieurement sur la cuve de fourrage (11).

2. Dispositif selon la revendication 1, caractérisé par le fait qu'il est prévu un arbre (30) horizontal individuel qui s'étend transversalement dans la cuve de fourrage (11).

3. Dispositif selon la revendication 1 ou 2, caractérisé par le fait que les lames (32) prévus sur les bras (31) et les lames conjuguées (33) sont chacune réalisées sous forme de lame à double tranchant agissant dans les deux directions de rotation de l'arbre (30).

4. Dispositif selon l'une des revendications 1 à 3, caractérisé par le fait que les lames (32) ont la forme d'un triangle pointu vers l'extérieur.

5. Dispositif selon l'une des revendications 1 à 4, caractérisé par le fait les lames (32) sont présentes au nombre de deux sur chacun des bras (31) et comportent entre elles une fente (32'), la fente (32') servant de fente de passage pour la lame conjuguée (33) fixe correspondante.

6. Dispositif selon l'une des revendications 1 à 5, caractérisé par le fait que les lames conjuguées (33) sont des plaques triangulaires plates, l'angle obtus étant dirigé vers l'organe de mélange et de broyage (3).

7. Dispositif selon l'une des revendications 1 à 6, caractérisé par le fait que la plaque coupante (2) peut pivoter par rapport au bras (23) autour d'un axe (21) s'étendant au voisinage du bord supérieur de ladite plaque.

8. Dispositif selon l'une des revendications 1 à 7, caractérisé par le fait que les moyens de coupe (20) prévus sur la plaque coupante (2) sont constitués d'au moins une lame oscillante disposée sur le bord inférieur de ladite plaque et en option d'au moins un disque de coupe (20') rotatif disposé sur les bords latéraux de la plaque coupante (2).

9. Dispositif selon la revendication 7 ou 8, caractérisé par le fait que le fond (12, 12') de la cuve à fourrage (11) est, dans la zone (12') pouvant être balayée par le bord inférieur de la plaque coupante (2), réalisé sous la forme d'une section de paroi cylindrique dont le rayon correspond sensiblement au rayon de pivotement de la plaque coupante (2) lorsque cette dernière est dans sa position abaissée.

10. Dispositif selon l'une des revendications 1 à 9, caractérisé par le fait que au moins le fond (12, 12') de la cuve à fourrage (11) est, dans la zone (12) pouvant être balayée par l'organe de mélange et de broyage (3), réalisé sous la forme d'une section de paroi cylindrique dont le rayon correspond sensiblement au rayon maximal de l'organe de mélange et de broyage (3), plus une dimension de suspension libre.

11. Dispositif selon la revendication 10, caractérisé par le fait que la zone inférieure, susceptible d'être balayée par l'organe de mélange et de broyage (3), des côtés de la plaque coupante (2) tournés vers l'intérieur de la cuve, est réalisée sous la forme d'une section de paroi cylindrique arrondie ou d'une section de paroi cylindrique approchée comportant plusieurs arêtes, dont le rayon correspond au rayon du fond (12), les deux surfaces de section de paroi cylindrique se raccordant continuellement l'une à l'autre dans la position abaissée et pivotée vers l'intérieur de la plaque coupante (2).

12. Dispositif selon l'une des revendications 1 à 11, caractérisé par le fait qu'un couvercle (13'') en forme de grille ou de plaque est disposé sur le ou les bras (23), lequel couvercle ferme vers le haut la cuve de fourrage (11) dans la position abaissée dudit ou desdits bras.

13. Dispositif selon l'une des revendications 1 à 12 caractérisé par le fait que deux vis d'évacuation (35) alignées l'une par rapport à l'autre sont prévues sous le fond (12) de la cuve, chacune dans un canal de transport (36) propre, chaque canal de transport (36) s'étendant sur au maximum la moitié de la largeur de la cuve (11) dans la direction transversale du dispositif (1).

14. Dispositif selon la revendication 13, caractérisé par le fait que chaque canal de transport (36) communique avec l'intérieur de la cuve par l'intermédiaire d'une ouverture (37) qui est ménagée dans le fond (12) de la cuve et peut être obturée ou dégagée au moyen d'un tiroir (37').

15. Dispositif selon l'une des revendications 1 à 12, caractérisé par le fait que le fond (12) de la cuve comporte au moins une ouverture (137) pouvant être dégagée et obturée et qu'une bande transporteuse transversale (135) est disposée sous cette ouverture (137).

16. Dispositif selon la revendication 15, caractérisé par le fait qu'un clapet (137') pivotant est monté en tant qu'organe d'obturation sur l'ouverture (137).

17. Dispositif selon la revendication 15 ou 16, caractérisé par le fait qu'une grille de dosage (139) formée de lames ou de barres parallèles est disposée dans l'ouverture (137), les lames ou barres s'étendant dans la direction périphérique de la cuve (11).

18. Dispositif selon l'une des revendications 1 à 17, caractérisé par le fait qu'à l'extrémité d'évacuation de chaque vis d'évacuation (35) ou de la bande transporteuse transversale (135), il est prévu sur le côté extérieur du dispositif (1), un glissoir ajustable et/ou pouvant s'écarter et revenir élastiquement et/ou un revêtement de protection élastique.

19. Dispositif selon l'une des revendications 1 à 18, caractérisé par le fait que ce dispositif est réalisé sous la forme d'une remarque pouvant être actionnée et tirée par un véhicule de traction au par un tracteur et comportant deux roues mobiles (16) et une barre de traction (18) et que au moins la cuve (11) peut, pour la réception de fourrage, être abaissée jusqu'au niveau du sol entre les roues (16) montées sur des bielles oscillantes (15) longitudinales.

20. Dispositif selon l'une des revendications 1 à 18, caractérisé par le fait que ce dispositif est réalisé sous la forme d'un outil porté équipé d'organes d'attelage et pouvant être porté par les organes de levage d'un chargeur à roues ou d'un tracteur.

21. Dispositif selon l'une des revendications 1 à 20, caractérisé par le fait que les éléments rotatifs du dispositif (1) peuvent être entraînés par un dispositif d'entraînement à prise de force (34, 34') ou par des hydromoteurs et que les éléments pouvant être levés et abaissés et les éléments pivotants du dispositif (1) sont actionnés par des unités hydrauliques cylindre-piston (17, 22, 25).

22. Dispositif selon l'une des revendications 1 à 21, caractérisé par le fait que ce dispositif comporte un dispositif de pesée intégré.

23. Dispositif selon la revendication 22, caractérisé par le fait qu'un capteur de charge (40) électrique ou électronique est disposé aux points d'appui des deux bielles oscillantes (15) et de la barre de traction (18) au des organes d'attelage et que ces capteurs (40) sont reliés à une unité d'interprétation et d'affichage de poids.
